# DEMANDE DE BREVET EUROPEEN

(11) **EP 4 501 679 A1**
(43) Date de publication de la demande: **05.02.2025**
(21) Numéro de dépôt: 24189005.2
(22) Date de dépôt: 16.07.2024
(51) Int. Cl.: B60K 11/08

(54) **DISPOSITIF D'OBTURATION D'UN FLUX D'AIR POUR UN VÉHICULE AUTOMOBILE**

(30) Priorité: 31.07.2023 FR 2308288
(71) Demandeur: VALEO SYSTEMES THERMIQUES, 78320 Le Mesnil-Saint-Denis (FR)
(72) Inventeur: DURAISAMY, Shankar, Troy, 48083 (US); VELASCO, Sebastien, 600130 Chennai (IN); SIVAKUMAR, Baskar, 600130 Chennai (IN); SUBRAMANIAN, Arunkumar, 600130 Chennai (IN)
(74) Mandataire: Valeo Systèmes Thermiques

(57) **Abrégé**

Dispositif d'obturation (400) et de régulation d'un flux d'air (F) destiné à circuler à travers un échangeur de chaleur (7, 9) pour véhicule automobile, le dispositif d'obturation (400) comprenant un cadre support (361) définissant au moins une ouverture de passage d'un flux d'air (F) entrant et comportant au moins un rideau (404, 405) apte à se déplacer suivant une direction d'ouverture et fermeture, entre une position fermée obturant l'ouverture de passage et une position ouverte laissant passer le flux d'air (F) à travers l'ouverture de passage, l'au moins un rideau (404, 405) étant agencé pour s'enrouler et se dérouler autour d'un arbre enrouleur (401, 402) s'étendant sur le cadre support (361) le long d'un des côtés de l'ouverture de passage, le dispositif d'obturation (400) comprenant en outre au moins un organe d'appui (500) exerçant une pression contre l'arbre enrouleur (401, 402), ledit organe d'appui (500) plaquant l'au moins un rideau (404, 405) contre l'arbre enrouleur (401, 402).

## Description

L'invention concerne un dispositif d'obturation d'un flux d'air pour véhicule automobile. L'invention est en particulier destinée à équiper une face avant dudit véhicule pour faciliter ou au contraire pour obturer le passage d'un flux d'air à l'intérieur d'un module de refroidissement agencé au sein du véhicule automobile. Le flux d'air est plus particulièrement destiné à circuler au sein d'un ou de plusieurs échangeurs de chaleur aménagés à l'intérieur dudit module de refroidissement.

Il est courant d'utiliser un tel dispositif d'obturation d'un flux d'air pour réduire le coefficient de traînée et aussi pour améliorer les performances de refroidissement et de climatisation au sein d'un véhicule automobile. Un tel dispositif d'obturation comprend au moins un rideau monté dans un cadre support. Ce rideau est déplaçable alternativement entre une position ouverte et une position fermée. En se déplaçant entre ces deux positions, le au moins un rideau permet au dispositif d'obturation de laisser passer ou de faire obstacle au flux d'air traversant la calandre du véhicule automobile. Le déplacement du au moins un rideau s'effectue au moyen d'un ensemble cinématique qui guide le mouvement dudit au moins un rideau en translation, ainsi qu'un actionneur induisant un mouvement à l'ensemble cinématique.

Un tel dispositif d'obturation est de préférence installé au niveau d'une calandre du véhicule automobile. En position d'ouverture du au moins un rideau, un flux d'air peut circuler à travers la calandre et participer notamment au refroidissement du moteur du véhicule automobile. En position de fermeture du au moins un rideau, l'air ne pénètre pas via la calandre, ce qui réduit la traînée et permet ainsi de réduire la consommation de carburant et l'émission de dioxyde de carbone. Le dispositif d'obturation permet donc de réduire la consommation d'énergie et la pollution lorsque le moteur n'a pas besoin d'être refroidi par l'air extérieur. Pour passer d'une position à une autre, le au moins un rideau est un rideau souple, monté translatant au sein du cadre support et s'enroule et se déroule autour d'un axe enrouleur.

Néanmoins, l'utilisation d'un rideau souple pour le dispositif d'obturation peut entrainer des risques de pliures et désalignement à force de cycles d'enroulement et de désenroulement autour de l'axe d'enroulement. De tels plis ou désalignement peuvent bloquer le rideau ce qui rend inopérant le dispositif d'obturation.

Le but de la présente invention est donc de remédier au moins partiellement aux inconvénients de l'art antérieur et de proposer un dispositif d'obturation amélioré limitant les risques de plis ou de désalignement du rideau.

La présente invention concerne donc un dispositif d'obturation et de régulation d'un flux d'air destiné à circuler à travers un échangeur de chaleur pour véhicule automobile, le dispositif d'obturation comprenant un cadre support définissant au moins une ouverture de passage d'un flux d'air entrant et comportant au moins un rideau apte à se déplacer suivant une direction d'ouverture et fermeture, entre une position fermée obturant l'ouverture de passage et une position ouverte laissant passer le flux d'air à travers l'ouverture de passage, l'au moins un rideau étant agencé pour s'enrouler et se dérouler autour d'un arbre enrouleur s'étendant sur le cadre support le long d'un des côtés de l'ouverture de passage, le dispositif d'obturation comprenant en outre au moins un organe d'appui exerçant une pression contre l'arbre enrouleur, ledit organe d'appui plaquant l'au moins un rideau contre l'arbre enrouleur.

Selon un aspect de l'invention, le dispositif d'obturation comprend un premier rideau s'enroulant autour d'un premier arbre enrouleur et un deuxième rideau s'enroulant autour d'un deuxième arbre enrouleur, lesdits premier et deuxième arbres enrouleurs étant disposés sur des côtés opposés de l'ouverture de passage, chaque arbre enrouleur comportant au moins un organe d'appui.

Selon un autre aspect de l'invention, l'au moins un organe d'appui est monté translatant par rapport à l'arbre enrouleur auquel il est associé,
ledit au moins un organe d'appui comportant au moins un élément de rappel élastique de sorte à translater ledit au moins un organe d'appui en direction de l'arbre enrouleur auquel il est associé.

Selon un autre aspect de l'invention, l'organe d'appui comporte un unique élément d'appui en appui contre le au moins un rideau.

Selon un autre aspect de l'invention, l'organe d'appui comporte plusieurs éléments d'appui répartis équitablement sur la largeur du ou moins un rideau.

Selon un autre aspect de l'invention, l'organe d'appui comporte au moins un rouleau, ledit rouleau ayant un axe de rotation parallèle à l'axe de l'arbre enrouleur auquel il est associé.

Selon un autre aspect de l'invention, l'organe d'appui comporte un axe de rotation et plusieurs rouleaux montés sur ledit axe de rotation, l'au moins un élément élastique appuyant sur ledit axe de rotation.

Selon un autre aspect de l'invention, l'organe d'appui est intégré dans l'un des côtés de l'ouverture de passage du cadre support.

Selon un autre aspect de l'invention, l'organe d'appui est une pièce rapportée fixée sur l'un des côtés de l'ouverture de passage du cadre support.

Selon un autre aspect de l'invention, l'organe d'appui est en appui contre le rideau sur au minimum 10% de la largeur dudit rideau, de préférence entre 10% et 30% de la largeur du rideau.

Il est entendu que l'ensemble des caractéristiques et des configurations précédemment données ne sont en rien limitatives. D'autres caractéristiques, détails et avantages de l'invention ressortiront plus clairement à la lecture de la description détaillée donnée ci-après, et de plusieurs exemples de réalisation donnés à titre indicatif et non limitatif en référence aux dessins schématiques annexés, sur lesquels :
[Fig. 1] la figure 1 est une représentation schématique, en vue de côté, la face avant d'un véhicule automobile comprenant un dispositif d'obturation d'un flux d'air selon l'invention ainsi qu'un module de refroidissement ;
[Fig. 2] la figure 2 est une représentation schématique en vue éclatée du dispositif d'obturation ;
[Fig. 3a] la figure 3a est une représentation schématique en vue de face du dispositif d'obturation de la figure 2 dans laquelle les rideaux sont en position ouverte ;
[Fig. 3b] la figure 3b est une représentation schématique en vue de face du dispositif d'obturation de la figure 2 dans laquelle les rideaux sont en position partiellement ouverte ;
[Fig. 3c] la figure 3c est une représentation schématique en vue de face du dispositif d'obturation de la figure 2 dans laquelle les rideaux sont en position fermée ;
[Fig. 4] la figure 4 est une représentation schématique d'une portion de l'ensemble cinématique qui équipe le dispositif d'obturation d'un flux d'air de la figure 2 ;
[Fig. 5] la figure 5 est une représentation schématique en vue arrière d'un dispositif d'obturation selon un premier mode de réalisation,
[Fig. 6] la figure 6 est une représentation schématique en vue arrière d'un dispositif d'obturation selon un deuxième mode de réalisation,
[Fig. 7] la figure 7 est une représentation schématique en vue arrière d'un dispositif d'obturation selon un troisième mode de réalisation.

Les éléments identiques sur les différentes figures portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

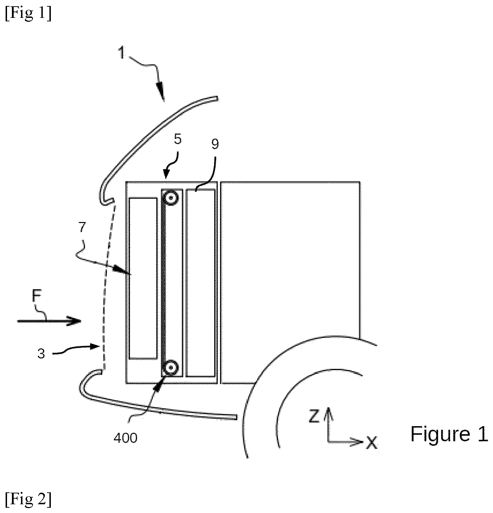

La figure 1 illustre, selon une vue en coupe de côté, un dispositif d'obturation d'entrée d'air 400 d'un flux d'air F disposé à l'avant d'un véhicule automobile 1. Le flux d'air F s'écoule sensiblement parallèlement à une direction X qui correspond à l'axe longitudinal du véhicule automobile 1. Le dispositif d'obturation d'entrée d'air 400 est notamment agencé derrière une calandre 3 qui équipe la face avant du véhicule automobile 1. Un module de refroidissement 5 qui comporte au moins un échangeur de chaleur 7, 9 destiné à être traversé par le flux d'air F pénétrant à l'intérieur du véhicule automobile 1 via la calandre 3 est également placée derrière cette dernière. Le ou les échangeurs de chaleur 7, 9 s'étendent dans des plans parallèles à ceux générés par les directions Y et Z du trièdre XYZ. Dans l'exemple illustré sur la figure 1, le module de refroidissement 5 comporte plus exactement deux échangeurs de chaleur 7 et 9 qui sont disposés de part et d'autre du dispositif d'obturation 400 suivant l'axe X.

Le module de refroidissement 5 comprend par exemple un échangeur de chaleur amont 7 selon le sens de circulation du flux d'air F (illustré par une flèche située à gauche sur la fig. 1) et un échangeur de chaleur aval 9 (situé à droite sur la fig. 1) agencés en série selon l'axe longitudinal X du véhicule automobile 1. Dans cet agencement particulier, c'est l'échangeur de chaleur amont 7 qui est traversé en premier par le flux d'air F et l'échangeur de chaleur aval 9 en deuxième.

L'échangeur de chaleur amont 7 est par exemple un radiateur de refroidissement, dit basse température, qui sert à refroidir un liquide de refroidissement d'une boucle d'échange de chaleur, dite basse température, et qui comprend, notamment, un condenseur de climatisation et/ou un refroidisseur d'air de suralimentation. L'échangeur de chaleur aval 9 est, par exemple, un radiateur de refroidissement haute température destiné à refroidir un liquide de refroidissement d'une boucle d'échange de chaleur comprenant un moteur du véhicule. L'air qui traverse cet échangeur aval 9 refroidit le liquide de refroidissement du moteur.

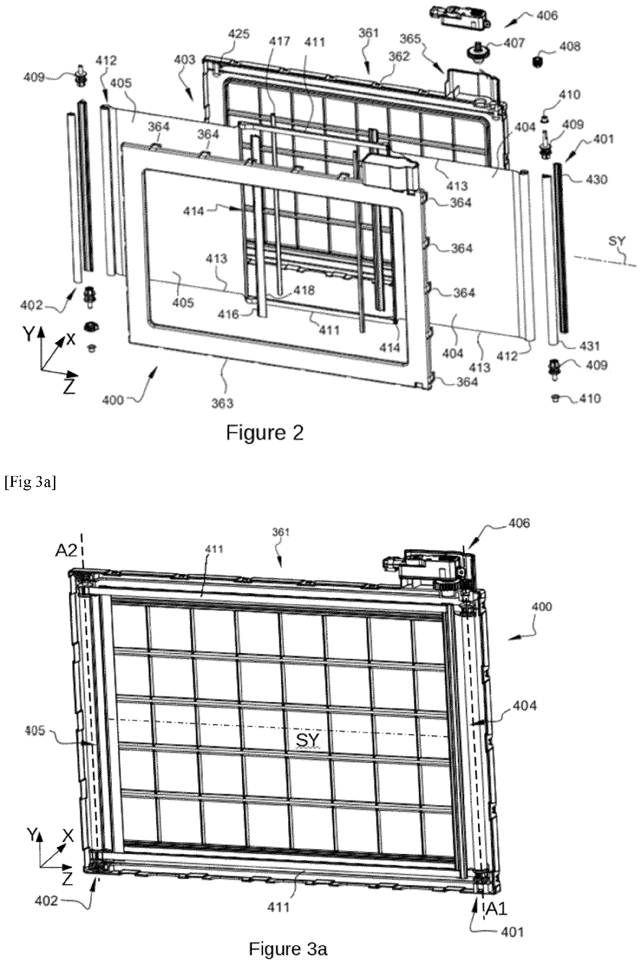

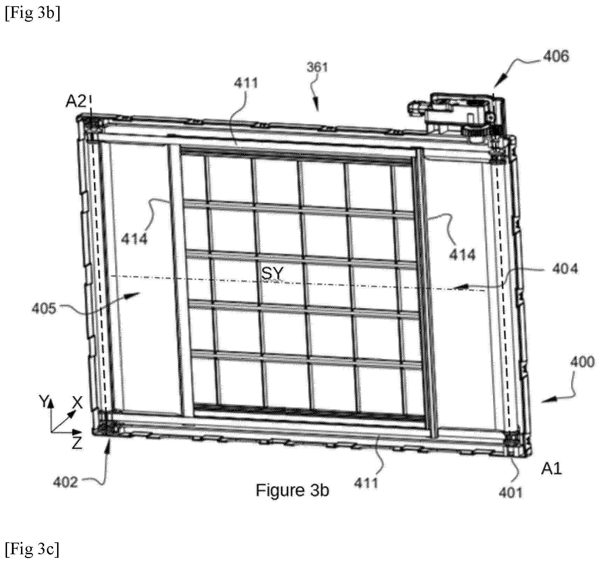

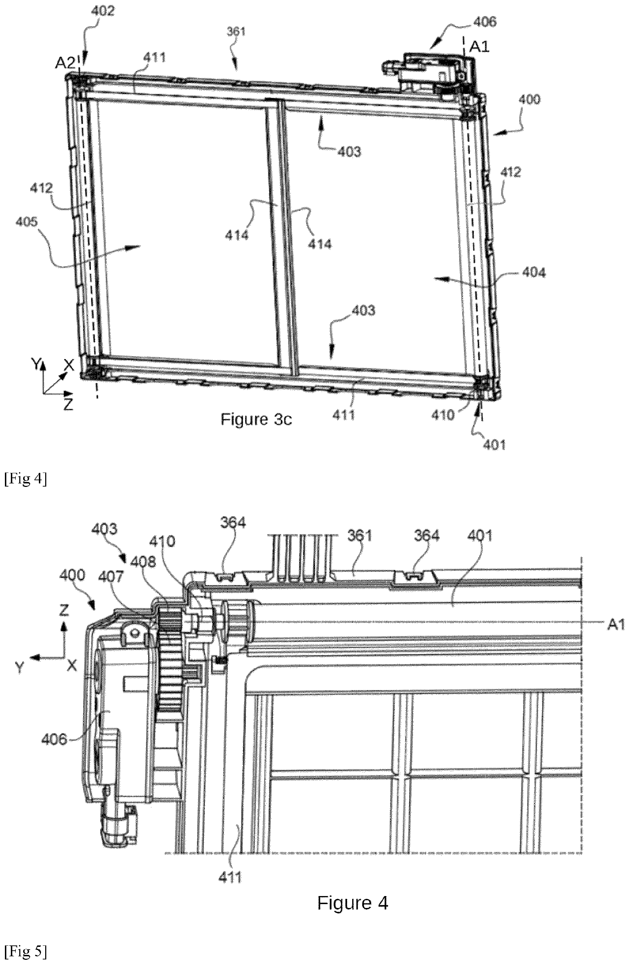

Selon un mode de réalisation du dispositif d'obturation 400 illustré sur les figures 2, 3a, 3b et 3c, le dispositif d'obturation 400 comprend un cadre support 361 de forme globalement rectangulaire. En se référant au trièdre XYZ dans les figures 2, 3a, 3b et 3c, le cadre support 361 s'étend dans le plan formé par les axes Y et Z. Le cadre support 361 définit notamment au moins une ouverture de passage d'un flux d'air F au travers de laquelle le flux d'air F peut passer.

En se référant au mode de réalisation illustré sur la figure 2, le cadre support 361 peut comporter par exemple une première coque 362 et une deuxième coque 363 qui sont configurées pour être imbriquées l'une avec l'autre de manière à former une première traverse et une deuxième traverse qui sont parallèles entre elles, ainsi que deux montants latéraux qui s'étendent entre les extrémités de la première traverse et de la deuxième traverse de façon à définir au moins une ouverture de passage du cadre support 361 destinée à être emprunté par le flux d'air F traversant la calandre 3 de la face avant du véhicule automobile 1, comme illustré sur la figure 1. Sur les figures 2, 3a, 3b et 3c, la première traverse et la deuxième traverse du cadre support 361 sont orientées suivant la direction Y et les deux montants latéraux sont orientées de manière sensiblement verticale suivant la direction Z. Le flux d'air est censé circuler à travers le dispositif d'obturation 400 suivant la direction X.

Les deux coques 362 et 363 du cadre support 361 du dispositif d'obturation 400 sont notamment rigides, elles sont par exemple réalisées en matière plastique. Les deux coques 362 et 363 sont notamment obtenues par moulage par injection. Afin d'améliorer la rigidité globale dudit cadre support 361 formé par ces deux coques 362 et 363, celles-ci peuvent être moulées en une seule pièce.

Des pattes de clipsage 364 (visibles sur les figures 2 et 4) ou tout autre moyen de liaison permettant d'assembler les coques 362 et 363 entre elles peuvent équiper les première et deuxième traverses et/ou les montant latéraux du cadre support 361. Ces pattes de clipsages 364 permettent de démonter le cadre support 361 pour nettoyer, entretenir ou éventuellement remplacer les composants du dispositif d'obturation 400.

D'autres modes de réalisation sont cependant tout à fait possibles et envisageables comme par exemple un cadre support 361 formé d'une seule pièce, ou alors dont les première et deuxième traverses et/ou les montant latéraux sont d'un seul tenant et assemblés les uns aux autres.

Le cadre support 361 du dispositif d'obturation 400 est configuré pour servir de support à diverses pièces dont au moins un arbre enrouleur 401, 402. Le dispositif d'obturation 400 comporte également au moins un rideau 404, 405 apte à se déplacer suivant une direction d'ouverture et fermeture, entre une position fermée obturant l'ouverture de passage et une position ouverte laissant passer le flux d'air F à travers l'ouverture de passage. Cet au moins un rideau 404, 405 est notamment agencé pour s'enrouler et se dérouler autour d'un arbre enrouleur 401, 402. L'au moins un arbre enrouleur 401, 402 s'étend sur le cadre support 361 le long d'un des côtés de l'ouverture de passage.

Comme illustré à la figure 2, l'au moins un arbre enrouleur 401, 402 peut comporter deux parties longitudinales 430 et 431 assemblées autours desquelles s'enroule le au moins un rideau 404, 405.

La figure 2 montre plus particulièrement un mode de réalisation dans lequel le dispositif d'obturation 400 comporte deux arbres enrouleurs 401, 402 disposés de part et d'autre de l'ouverture de passage du cadre support 361 et un rideau 404, 405 agencé pour s'enrouler et se dérouler autour d'au moins un arbre enrouleur 401, 402.

Dans ce mode de réalisation illustré à la figure 2, les arbres enrouleurs 401, 402 peuvent notamment être agencés au niveau de la première et de la deuxième traverse du cadre support 361 de manière à être pris en sandwich par les deux coques 362 et 363 qui forment ledit cadre support 361. Chaque arbre enrouleur 401, 402 peut comporter deux parties longitudinales 430 et 431 assemblées autours desquelles s'enroule un rideau 404, 405.

Le au moins un arbre enrouleur 401, 402 peut notamment comporter à ses extrémités longitudinales des embouts 409 coopérants avec des paliers 410 de manière à pouvoir tourner autour d'un axe enrouleur A1, A2 (visible sur les figures 3a à 3c). Dans le cas où le dispositif d'obturation 400 comporte deux arbres enrouleurs 401, 402, chaque arbre enrouleur 401, 402 peut comporter des paliers 410 dédiés et un axe enrouleur A1, A2 propre. Ces axes enrouleur A1, A2 sont préférentiellement parallèles aux première et deuxième traverses du cadre support 361.

Le au moins un rideau 404, 405 est mobile, c'est-à-dire qu'il est configuré pour s'enrouler et se dérouler autour d'un arbre enrouleur 401, 402. De cette manière, le au moins un rideau 404, 405 se déplace suivant une direction d'ouverture et de fermeture entre une position fermée (illustrée sur la figure 3c), obturant ainsi l'ouverture de passage, et une position ouverte (illustrée sur la figure 3a) qui laisse passer le flux d'air F à travers l'ouverture de passage. La figure 3b illustre une position intermédiaire dans le déplacement du au moins un rideau 404, 405 entre ses deux positions extrémales. Sur les figures 2, 3a, 3b et 3c, la direction d'ouverture et fermeture est parallèle à la direction Z. Dans le cas de la figure 1, la direction d'ouverture et fermeture correspond également à la direction verticale.

Le au moins un rideau 404, 405 peut notamment être obtenu par découpe : il est par exemple réalisé à partir d'un matériau souple, telle qu'une toile à base de fibres de verre recouverte d'un revêtement étanche et déperlant.

Le au moins un rideau 404, 405 est par exemple de forme globalement rectangulaire et présente une première bordure 412, deux bordures latérales 413 et une deuxième bordure 414, comme illustré sur la figure 2. La deuxième bordure 414 se situe à l'opposé de la première bordure 412, ces première 412 et deuxième 414 bordures sont parallèles entre elles et perpendiculaires à la direction d'ouverture et de fermeture du au moins un rideau 404. De plus, la première bordure 412 et la deuxième bordure 414 s'étendent parallèlement aux arbres enrouleurs 401, 402 tandis que les bordures latérales 413 sont parallèles à la direction d'ouverture et de fermeture du au moins un rideau 404, 405.

La première bordure 412 du au moins un rideau 404, 405 est solidaire de l'arbre enrouleur 401 ou 402 auquel ledit rideau 404 ou 405 est associé. Ainsi, lorsque le au moins un rideau 404, 405 est enroulé autour de l'arbre enrouleur 401 ou 402 auquel est rattaché sa première bordure 412, ceci correspond à sa position ouverte (figure 3a). Enrouler le au moins un rideau 404, 405 autour d'un arbre enrouleur 401, 402 permet de stocker ledit rideau de manière simple et compact lorsqu'il est dans sa position ouverte. Lorsque le au moins un rideau 404, 405 est dans sa position ouverte, le flux d'air F peut alors circuler à travers l'ouverture de passage dégagée pour atteindre les échangeurs de chaleur 7, 9 du module de refroidissement 5 disposé derrière la calandre 3.

À l'inverse, lorsque le au moins un rideau 404, 405 est déroulé suivant la direction de fermeture et d'ouverture, il est tendu de telle sorte qu'il fait obstacle au flux d'air F et obture ainsi l'ouverture de passage à travers le cadre support 361 du dispositif d'obturation 400. Ceci correspond alors à sa position de fermeture illustrée sur la figure 3c.

La deuxième bordure 414 du au moins un rideau 404, 405 peut être solidaire d'un organe d'étanchéité 416 qui peut prendre la forme d'une tige 417 assemblée avec un joint d'étanchéité 418, comme illustré sur la figure 2. La tige 417 peut notamment rigidifier ladite deuxième bordure 414. Les extrémités de la tige 417 peuvent par ailleurs être agencées dans des rails disposés sur les montants latéraux du cadre 361. La tige 417 permet ainsi de porter le joint d'étanchéité 418 mais aussi de maintenir le au moins un rideau 404, 405 contre le cadre support 361 et de guider le au moins un rideau 404, 405 dans son déplacement entre sa position ouverte et sa position fermée.

Afin de déplacer le au moins un rideau 404, 405 entre sa position d'ouverture et sa position de fermeture, le dispositif d'obturation 400 comporte un actionneur électrique 406 coopérant avec un arbre enrouleur 401, 402. Dans le mode de réalisation du dispositif d'obturation 400 illustré sur les figures 2, 3a, 3b et 3c, l'actionneur électrique 406 coopère plus particulièrement avec le premier arbre enrouleur 401. Sur ces mêmes figures, l'actionneur 406 est logé dans un boitier 365 disposé sur un montant latéral du cadre 361.

L'actionneur 406 peut notamment être configuré pour faire tourner l'arbre enrouleur 401, 402 auquel il est associé via deux roues dentées 407 et 408 par exemple. Ces roues 407 et 408 engrènent ensemble, ceci est notamment illustré sur la figure 4. Sur cette même figure, la roue dentée 407 est solidaire de l'actionneur 406, de son moteur électrique en particulier, et la roue dentée 408 est solidaire de l'arbre 401.

Dans le cas où le dispositif d'obturation 400 comporte deux arbres enrouleur 401 et 402, le premier arbre enrouleur 401 peut notamment être entrainable par l'actionneur électrique 406 et le deuxième arbre enrouleur 402 peut être passif.

Le dispositif d'obturation 400 comprend également un ensemble cinématique 403 configuré pour mettre en mouvement le au moins un rideau 404, 405 selon sa direction d'ouverture et de fermeture. L'ensemble cinématique 403 est plus particulièrement agencé pour transmettre un mouvement du premier arbre enrouleur 401 associé à l'actionneur électrique 406 au deuxième arbre enrouleur 402. L'ensemble cinématique 403 coopère ainsi avec les deux arbres enrouleurs 401, 402 pour associer leur rotation respective. Le deuxième arbre enrouleur 402 peut être qualifié de « passif » dans le sens où il n'est pas directement relié à l'actionneur 406 comme c'est le cas pour le premier arbre enrouleur 401, mais entrainé par l'ensemble cinématique 403 liant ces deux arbres enrouleurs 401 et 402.

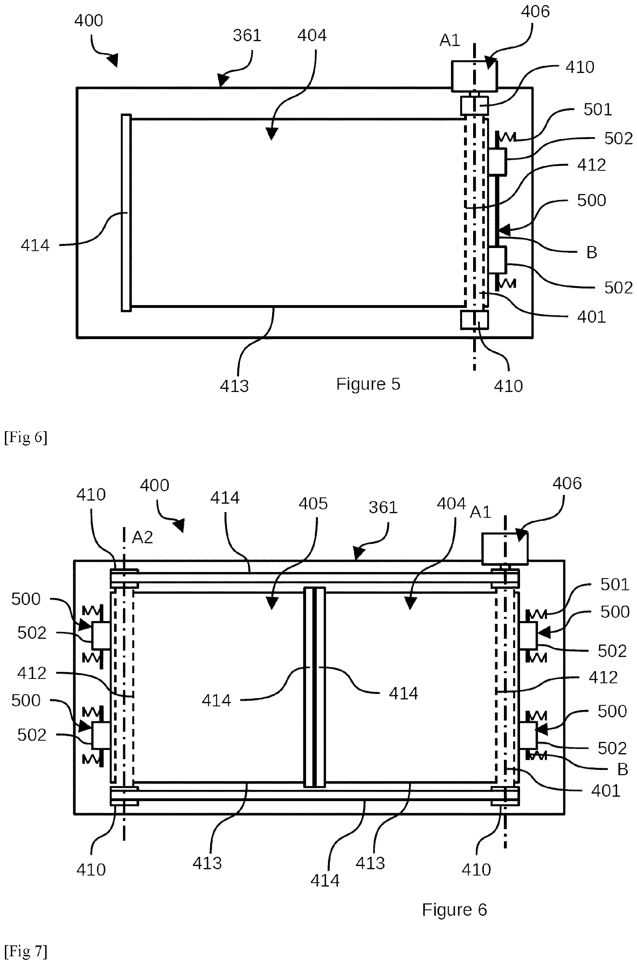

Selon une première variante illustrée à la figure 6, l'ensemble cinématique 403 peut comporter au moins une courroie 415 reliant le premier 401 et le deuxième 402 arbre enrouleur afin de transmettre la rotation du premier arbre d'enrouleur 401 au deuxième arbre enrouleur 402. De préférence l'ensemble cinématique 403 comporte une courroie 415 disposée à chaque extrémité des arbres enrouleurs 401, 402.

Selon une deuxième variante illustrée aux figures 2 à 4, le au moins un rideau 404, 405 peut également être prolongé par au moins un élément de courroie 411 qui fait partie de l'ensemble cinématique 403. Le au moins un élément de courroie 411 présente notamment une forme longiligne, il s'étend parallèlement aux bords latéraux 413 du au moins un rideau 404, 405 auquel il est associé. Dans le mode de réalisation du dispositif d'obturation 400 illustré sur les figures 2, 3a, 3b et 3c, deux éléments de courroie 411 parallèles entre eux prolongent le au moins un rideau 404, 405 sur deux bords latéraux 413 opposés l'un à l'autre. Ces deux éléments de courroie 411 sont disposés de manière symétrique par rapport à un axe de symétrie SY qui s'étend parallèlement à la direction d'ouverture et de fermeture. Cet axe de symétrie SY passe alors par le milieu du au moins un rideau 404, 405, comme illustré sur les figures 3a et 3b. Les éléments de courroie 411 forment ainsi des bandes de matière qui prolongent le au moins un rideau 404, 405 telles des bretelles.

Dans cette même variante, l'un des éléments de courroie 411 se prolonge au moins partiellement au-dessus d'une bordure latérale 413 du au moins un rideau 404, 405 et l'autre élément de courroie 411 se prolonge au moins partiellement en dessous de l'autre bordure latérale 413 du au moins un rideau 404, 405. Dit autrement, lorsque le au moins un rideau 404, 405 et les éléments de courroie 411 qui lui sont associés sont posés à plat, ces éléments de courroie 411 s'écartent des bords latéraux 413 du au moins un rideau 404, 405. Ainsi les éléments de courroie 411 n'obstruent pas l'ouverture de passage à travers le cadre support 361 lorsque le au moins un rideau 404, 405 se trouve dans sa position ouverte. Les éléments de courroie 411 se trouvent à l'écart de l'emplacement occupé par le au moins un rideau 404, 405 en positon fermée.

Le ou les éléments de courroie 411 peuvent être réalisés d'un seul tenant avec le au moins un rideau 404 ou 405 auquel ils sont associés. Autrement dit, l'élément de courroie 411 et le au moins un rideau 404 ou 405 sont par exemple découpés dans une même toile lors de la fabrication.

Selon une alternative, le ou les éléments de courroie 411 sont des éléments assemblés avec le au moins un rideau 404 ou 405, c'est-à-dire que l'élément de courroie 411 n'est pas formé dans la même pièce que le rideau 404 ou 405. L'élément de courroie 411 est par exemple réalisé en un matériau différent du matériau du au moins un rideau 404, 405. Le ou les éléments de courroie peuvent alors être fixés audit rideau 404, 405 par une fixation, par exemple une couture, de la colle, une soudure ou autre.

Selon un premier mode de réalisation du dispositif d'obturation 400, celui-ci ne comprend qu'un seul rideau (ce mode de réalisation est illustré par exemple sur la figure 5). Dans ce premier mode de réalisation, l'unique rideau 404 est solidarisé au premier arbre enrouleur 401 par l'intermédiaire de sa première bordure 412. L'unique rideau 404 est alors configuré pour s'enrouler et se dérouler autour de ce premier arbre enrouleur 401.

Selon une variante de ce premier mode de réalisation non représentée, le dispositif d'obturation 400 peut comporter un deuxième arbre disposé sur un côté du cadre support 361 opposé à celui comportant le premier arbre enrouleur. Ce deuxième arbre enrouleur ne comporte pas de deuxième rideau mais est relié à l'unique rideau 404 par au moins un élément de courroie. Le au moins un élément de courroie est tendu parallèlement à la direction d'ouverture et de fermeture du rideau 404 entre la deuxième bordure 414 de l'unique rideau 404 et le deuxième arbre enrouleur. Le au moins un élément de courroie est amené à s'enrouler autour du deuxième arbre enrouleur 402 lorsque l'unique rideau 404 est déroulé. L'élément de courroie permet ainsi de guider l'unique rideau 404 pendant son déplacement entre ses positions extrémales et peut également empêcher l'unique rideau 404 de se louvoyer au cours dudit déplacement.

Dans cette variante du premier mode de réalisation, la rotation du deuxième arbre enrouleur 402 est par exemple assurée par un deuxième actionneur (non représenté sur les figures) couplé au deuxième arbre enrouleur 402. Dans le cas spécifique où le dispositif d'obturation 400 comprend un actionneur par arbre enrouleur 401 et 402, ces deux actionneurs sont configurés de telle sorte qu'ils permettent une rotation synchronisée des deux arbres enrouleurs 401 et 402. L'élément de courroie 411 ainsi que l'ensemble cinématique 403 plus généralement, peuvent également coopérer avec les deux arbres enrouleurs 401 et 402 de manière à contribuer à la rotation synchronisée entre les deux arbres enrouleurs 401 et 402 pour déplacer l'unique rideau 404 entre sa position fermée et sa position ouverte.

Dans ce premier mode de réalisation, l'unique rideau 404 a atteint la position ouverte lorsqu'il est entièrement enroulé autour du premier arbre enrouleur 401. À l'inverse, l'unique rideau 404 a atteint la position fermée lorsqu'il est déroulé et qu'il s'étend entre le premier arbre enrouleur 401 et le deuxième arbre enrouleur 402 de manière à obstruer l'ouverture de passage à travers le cadre support 361, empêchant ainsi au flux d'air F de circuler à travers ladite ouverture. Dans sa position fermée, la deuxième bordure 414 de l'unique rideau 404 se situe notamment au niveau de la deuxième traverse du cadre support 361.

Selon un deuxième mode de réalisation illustré sur les figures 2, 3a, 3b et 3c, le dispositif d'obturation 400 comprend deux rideaux 404 et 405 distincts qui sont disposés de part et d'autre de l'ouverture de passage délimitée par le cadre support 361. Le dispositif d'obturation 400 comprend plus particulièrement un premier rideau 404 configuré pour s'enrouler et se dérouler autour du premier arbre enrouleur 401 et un deuxième rideau 405 configuré pour s'enrouler et se dérouler autour du deuxième arbre enrouleur 402.

Dans ce deuxième mode de réalisation, lorsque les deux rideaux 404 et 405 sont en position ouverte (figure 3a) ou partiellement ouverte (figure 3b), les deuxièmes bordures 414 respectives des rideaux 404 et 405 sont à distance l'une de l'autre. Plus précisément, la deuxième bordure 414 du premier rideau 404 se situe à proximité de la première traverse du cadre support 361 du dispositif d'obturation 400 et de régulation du flux d'air F tandis que la deuxième bordure 414 du deuxième rideau 405 se situe à proximité de la deuxième traverse.

Par ailleurs, les joints d'étanchéité 418 associés aux deux rideaux 404 et 405 peuvent venir en contact l'un de l'autre lorsque les rideaux 404 et 405 sont en position fermée (figure 3c), de manière à empêcher le flux d'air F de passer à travers l'ouverture de passage du cadre support 361.

Selon la variante de ce deuxième mode de réalisation illustrée sur les figures 2, 3a, 3b et 3c, chaque rideau 404 et 405 est prolongé par au moins un élément de courroie 411 qui lui est propre et qui fait partie de l'ensemble cinématique 403. Autrement dit, les éléments de courroie 411 qui prolongent le premier rideau 404 d'une part et le deuxième rideau 405 d'autre part forment une courroie complète qui lie les deux arbres enrouleurs 401, 402 en mouvement.

Ainsi, pour passer de la position fermée à une position plus ouverte, l'ensemble cinématique 403, via les éléments de courroie 411 et les deux rideaux 404 et 405 agissent ensemble pour faire tourner les arbres enrouleurs 401, 402 de manière synchronisée afin de déplacer simultanément les deux rideaux 404 et 405.

Selon une autre variante illustrée à la figure 6, la rotation synchronisée des premier 401 et deuxième 402 arbres enrouleurs est assurée par au moins une courroie 414.

Comme illustré aux figures 5 et 6, le dispositif d'obturation 400 comporte également au moins un organe d'appui 500 exerçant une pression contre l'arbre enrouleur 401, 402. Plus précisément, le au moins un organe d'appui 500 plaque l' au moins un rideau 404, 405 contre l'arbre enrouleur 401, 402.

Un tel organe d'appui 500 permet notamment de limiter les risques que le rideau 404, 405 se bloque. En effet, l'organe d'appui 500 limite les risques de désalignement du rideau 404, 405, notamment en limitant la formation de plis. L'organe d'appui 500 permet ainsi une meilleure durabilité du dispositif d'obturation 400.

L'organe d'appui 500 peut comporter un unique élément en appui contre le rideau 404, 405 ou bien plusieurs éléments d'appui répartis de préférence équitablement sur la largeur du rideau 404, 405.

Afin d'améliorer son efficacité, l'organe d'appui 500 peut plus particulièrement être en appui contre le rideau 404, 405 sur au minimum 10% de la largeur dudit rideau 404, 405, de préférence entre 10% et 30% de la largeur du rideau 404, 405. Au-delà de 30%, les frictions entre le rideau 404, 405 et l'organe d'appui 500 peuvent être trop importantes et empêcher l'arbre enrouleur 401, 402 de tourner convenablement.

Dans l'exemple illustré à la figure 5, le dispositif d'obturation 400 comporte un unique rideau 404 connecté à un premier arbre enrouleur 401. Le au moins un organe d'appui 500 exerce alors une pression contre le premier arbre enrouleur 401.

Dans l'exemple illustré à la figure 6, le dispositif d'obturation 400 comprend un premier rideau 404 s'enroulant autour d'un premier arbre enrouleur 401 et un deuxième rideau 405 s'enroulant autour d'un deuxième arbre enrouleur 402. Les premier 401 et deuxième 402 arbres enrouleurs sont disposés sur des côtés opposés de l'ouverture de passage du cadre support 361. Chaque arbre enrouleur 401, 402 comporte au moins un organe d'appui 500.

Afin de compenser les variations de diamètre de l'arbre enrouleur 401, 402 du fait de l'enroulement et déroulement du rideau 404, 405, le au moins un organe d'appui 500 peut plus particulièrement être monté translatant par rapport à l'arbre enrouleur 401, 402 auquel il est associé. Le au moins un organe d'appui 500 peut également comporter au moins un élément de rappel élastique 501 de sorte à translater ledit au moins un organe d'appui 500 en direction de l'arbre enrouleur 401, 402 associé. Cet élément de rappel élastique 501 permet notamment à l'organe d'appui 500 d'être constamment plaqué contre l'arbre enrouleur 401, 402 auquel il est associé et permet également d'appliquer une pression constante contre le rideau 404, 405 enroulé, quelle que soit le degré d'enroulement du rideau 404, 405 et sa position.

Selon un premier mode de réalisation non représenté de l'au moins un organe d'appui 500, ce dernier peut être un élément simple d'appui sur l'arbre enrouleur 401, 402 auquel il est associé. Le rideau 404, 405 glisse alors contre le au moins organe d'appui 500 lors de son enroulement et déroulement autour de l'arbre enrouleur 401, 402 auquel il est associé. Par exemple cet élément d'appui peut être une languette élastique. Le coefficient de friction entre cet élément d'appui et le rideau 404, 405 est de préférence déterminer de sorte à ne pas endommager le rideau 404, 405 et permettre que ce dernier glisse contre le au moins organe d'appui 500.

Selon un deuxième mode de réalisation illustré aux figures 5 et 6, l'organe d'appui 500 comporte au moins un rouleau 502. Ce rouleau 502 a notamment un axe de rotation B parallèle à l'axe A1, A2 de l'arbre enrouleur 401, 402 auquel il est associé.

Selon une première variante illustrée à la figure 5, l'organe d'appui 500 peut comporter un axe de rotation B et plusieurs rouleaux 502 montés sur ledit axe de rotation B. Le au moins un élément élastique 501 appui alors sur ledit axe de rotation B.

Dans l'exemple illustré à la figure 5, l'organe d'appui 500 comporte un élément élastique 501, par exemple un ressort, disposé à chaque extrémité de l'axe de rotation B.

Selon une deuxième variante illustrée à la figure 6, l'organe d'appui 500 comporte également plusieurs rouleaux 502. Chaque rouleau 502 comporte un axe de rotation B individuel. Chaque rouleau 502 comporte également au moins un élément élastique 501 appuyant sur son axe de rotation B individuel. Chaque rouleau 502 est ainsi indépendant à la fois en rotation et en translation par rapport à l'arbre enrouleur 401, 402 auquel il est associé.

L'organe d'appui 500 peut notamment être intégré dans l'un des côtés de l'ouverture de passage du cadre support 361. Par la, on entend que le cadre support 361 comporte des éléments de l'organe d'appui 500, par exemple :
- un logement dans lequel le l'organe d'appui 500 est disposé,
- une paroi d'appui contre laquelle l'élément élastique 501 peut prendre appui pour exercer une force en direction de l'arbre enrouleur 401, 402 auquel l'organe d'appui 500 est associé,
- des guides ou rails dans lesquels l'organe d'appui 500 lui-même ou son axe de rotation B peut coulisser.

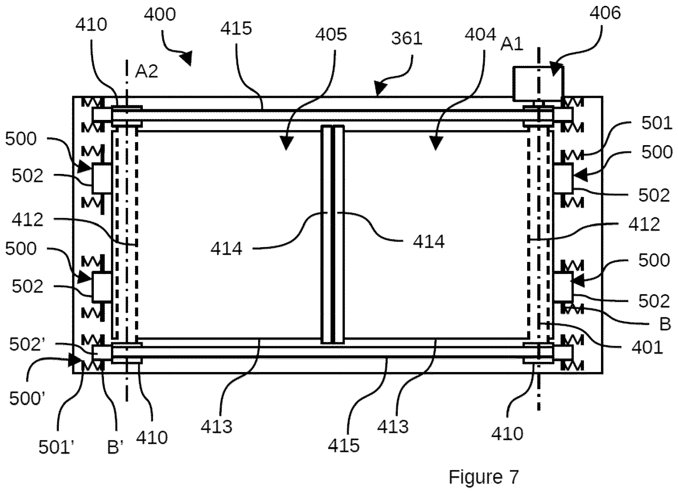

Comme illustré à la figure 7, lorsque le dispositif d'obturation 400 comporte au moins une courroie 415 reliant le premier 401 et le deuxième 402 arbre enrouleur, le dispositif d'obturation peut également comporter au moins un organe d'appui 500' exerçant une pression contre l'arbre enrouleur 401, 402. Plus précisément, le au moins un organe d'appui 500' plaque l'au moins une courroie 415 contre l'arbre enrouleur 401, 402, notamment contre le palier 410.

Un tel organe d'appui 500' permet notamment de limiter les risques que l' au moins une courroie 415 ne bouge et permet à cette dernière de rester en appuis contre le palier 410 même si sa tension diminue. L'organe d'appui 500' limite également les risques de formation de plis ou retournement de la courroie 415. L'organe d'appui 500 permet ainsi une meilleure durabilité du dispositif d'obturation 400.

L'au moins un organe d'appui 500' peut également être monté translatant par rapport à l'arbre enrouleur 401, 402 auquel il est associé. Le au moins un organe d'appui 500' peut également comporter au moins un élément de rappel élastique 501' de sorte à translater ledit au moins un organe d'appui 500' en direction de l'arbre enrouleur 401, 402 associé. Cet élément de rappel élastique 501' permet notamment à l'organe d'appui 500' d'être constamment plaqué contre l'arbre enrouleur 401, 402 auquel il est associé et permet également d'appliquer une pression constante contre la courroie 415.

Selon un premier mode de réalisation non représenté de l'au moins un organe d'appui 500' peut être un élément simple d'appui sur l'arbre enrouleur 401, 402 auquel il est associé. La courroie 415 glisse alors contre le au moins organe d'appui 500'. Par exemple cet élément d'appui 500' peut être une languette élastique. Le coefficient de friction entre cet élément d'appui 500' et la courroie 415 est de préférence déterminer de sorte à ne pas endommager la courroie 415 et permettre que cette dernière glisse contre le au moins organe d'appui 500'.

Selon un deuxième mode de réalisation illustré à la figure 7, l'organe d'appui 500' comporte au moins un rouleau 502'. Ce rouleau 502' a notamment un axe de rotation B' parallèle à l'axe A1, A2 de l'arbre enrouleur 401, 402 auquel il est associé. L'organe d'appui 500' peut ainsi comporter un élément élastique 501', par exemple un ressort, disposé à chaque extrémité de l'axe de rotation B'.

L'organe d'appui 500' peut également être intégré dans l'un des côtés de l'ouverture de passage du cadre support 361. Par la, on entend que le cadre support 361 comporte des éléments de l'organe d'appui 500', par exemple :
- un logement dans lequel le l'organe d'appui 500' est disposé,
- une paroi d'appui contre laquelle l'élément élastique 501' peut prendre appui pour exercer une force en direction de l'arbre enrouleur 401, 402 auquel l'organe d'appui 500' est associé,
- des guides ou rails dans lesquels l'organe d'appui 500' lui-même ou son axe de rotation B' peut coulisser.

Un tel organe d'appui 500' peut tout à fait être envisagé pour un dispositif d'obturation 400 comme illustré aux figures 2 à 4 et ainsi venir exercer une pression contre l'arbre enrouleur 401, 402 de sorte à plaquer un élément de courroie 411 contre un arbre enrouleur 401, 402.

Au contraire, l'organe d'appui 500 peut être une pièce rapportée fixée sur l'un des côtés de l'ouverture de passage du cadre support 361. Cela permet notamment d'ajouter et d'adapter un organe d'appui 500 sur un cadre support standard.

## Revendications

1. Dispositif d'obturation (400) et de régulation d'un flux d'air (F) destiné à circuler à travers un échangeur de chaleur (7, 9) pour véhicule automobile, le dispositif d'obturation (400) comprenant un cadre support (361) définissant au moins une ouverture de passage d'un flux d'air (F) entrant et comportant au moins un rideau (404, 405) apte à se déplacer suivant une direction d'ouverture et fermeture, entre une position fermée obturant l'ouverture de passage et une position ouverte laissant passer le flux d'air (F) à travers l'ouverture de passage, l'au moins un rideau (404, 405) étant agencé pour s'enrouler et se dérouler autour d'un arbre enrouleur (401, 402) s'étendant sur le cadre support (361) le long d'un des côtés de l'ouverture de passage,
**caractérisé en ce qu'**il comprend en outre au moins un organe d'appui (500) exerçant une pression contre l'arbre enrouleur (401, 402), ledit organe d'appui (500) plaquant l'au moins un rideau (404, 405) contre l'arbre enrouleur (401, 402).

2. Dispositif d'obturation (400) selon la revendication précédente,
**caractérisé en ce qu'**il comprend un premier rideau (404) s'enroulant autour d'un premier arbre enrouleur (401) et un deuxième rideau (405) s'enroulant autour d'un deuxième arbre enrouleur (402), lesdits premier (401) et deuxième (402) arbres enrouleurs étant disposés sur des côtés opposés de l'ouverture de passage, chaque arbre enrouleur (401, 402) comportant au moins un organe d'appui (500).

3. Dispositif d'obturation (400) selon l'une quelconque des
revendications précédentes, **caractérisé en ce que** l'au moins un organe d'appui (500) est monté translatant par rapport à l'arbre enrouleur (401, 402) auquel il est associé,
ledit au moins un organe d'appui (500) comportant au moins un élément de rappel élastique (501) de sorte à translater ledit au moins un organe d'appui (500) en direction de l'arbre enrouleur (401, 402) auquel il est associé.

4. Dispositif d'obturation (400) selon l'une quelconque des
revendications 1 à 3, **caractérisé en ce que** l'organe d'appui (500) comporte un unique élément d'appui (502) en appui contre le au moins un rideau (404, 405).

5. Dispositif d'obturation (400) selon l'une quelconque des
revendications 1 à 3, **caractérisé en ce que** l'organe d'appui (500) comporte plusieurs éléments d'appui (502) répartis équitablement sur la largeur du ou moins un rideau (404, 405).

6. Dispositif d'obturation (400) selon l'une quelconque des
revendications 4 ou 5, **caractérisé en ce que** l'organe d'appui (500) comporte au moins un rouleau (502), ledit rouleau (502) ayant un axe de rotation (B) parallèle à l'axe (A1, A2) de l'arbre enrouleur (401, 402) auquel il est associé.

7. Dispositif d'obturation (400) selon la revendication précédente en
combinaison avec la revendication 3, **caractérisé en ce que** l'organe d'appui (500) comporte un axe de rotation (B) et plusieurs rouleaux (502) montés sur ledit axe de rotation (B), l'au moins un élément élastique (501) appuyant sur ledit axe de rotation (B).

8. Dispositif d'obturation (400) selon l'une quelconque des
revendications précédentes, **caractérisé en ce que** l'organe d'appui (500) est intégré dans l'un des côtés de l'ouverture de passage du cadre support (361).

9. Dispositif d'obturation (400) selon l'une quelconque des
revendications 1 à 5, **caractérisé en ce que** l'organe d'appui (500) est une pièce rapportée fixée sur l'un des côtés de l'ouverture de passage du cadre support (361).

10. Dispositif d'obturation (400) selon l'une quelconque des
revendications précédentes, **caractérisé en ce que** l'organe d'appui (500) est en appui contre le rideau (404, 405) sur au minimum 10% de la largeur dudit rideau (404, 405), de préférence entre 10% et 30% de la largeur du rideau (404, 405).
